# EUROPÄISCHE PATENTSCHRIFT

(11) **EP 0 308 713 B1**
(45) Veröffentlichungstag und Bekanntmachung des Hinweises auf die Patenterteilung: **17.03.1993**
(21) Anmeldenummer: 88114421.6
(22) Anmeldetag: 03.09.1988
(51) Int. Cl.: B62B 3/10

(54) **Einkaufswagen**
Shopping trolley
Chariot à emplettes

(30) Priorität: 17.09.1987 DE 3731190
(43) Veröffentlichungstag der Anmeldung: 29.03.1989
(73) Patentinhaber: WANZL METALLWARENFABRIK GMBH, D-89340 Leipheim (DE)
(72) Erfinder: Eberlein, Herbert, D-8871 Bubesheim (DE)

(56) Entgegenhaltungen:
- EP-A- 0 254 210
- DE-A- 3 415 392
- DE-A- 3 444 969
- DE-A- 3 445 596

## Beschreibung

Die Erfindung betrifft einen stapelbaren Einkaufswagen mit einem Fahrgestell und mit einem auf dem Fahrgestell aufgesetzten, eine Schiebeeinrichtung aufweisenden Korb, dessen Rückwand in das Korbinnere verschwenkbar ist, wobei an dem der Schiebeeinrichtung zugeordneten Ende des Einkaufswagens eine verschwenkbar gelagerte Ablage zum Abstellen größerer Gegenstände vorgesehen ist und die Ablage aus einer Nichtgebrauchslage in eine Gebrauchslage und umgekehrt bewegbar ist und wobei die mit einem Schwenkteil, mit einem Ablageabschnitt und mit zwei Schwenkarmen ausgestattete Ablage in ihrer Gebrauchslage durch zwei am Fahrgestell um eine waagrechte Achse drehbar gelagerte Halteteile gehalten ist, die einen Teil der Ablage schiebeführungsartig umfassen.

Ein Einkaufswagen dieser Art ist durch die DE 34 15 392 A1 näher beschrieben. Der in dieser Druckschrift vorgeschlagene Einkaufswagen ist mit einem die hinteren Träger des Fahrgestelles verbindenden Querstab ausgestattet, an dem bevorzugt um eine waagrechte Achse drehbar, mindestens ein Halteteil befestigt ist, das eine Schiebeführung aufweist, in welcher der Ablageabschnitt der Ablage entlang der Fahrtrichtung des Einkaufswagens schiebebeweglich geführt ist. Je nach Verwendungszweck kann es nachteilig sein, wenn die Halteteile am erwähnten Querstab befestigt sind. So würde ein solcher Querstab die Stapellänge mehrerer ineinandergeschobener Einkaufswagen dann wesentlich vergrössern, wenn diese Einkaufswagen mit einem Fahrgestell ausgestattet wären, deren konisch angeordnete Längsholme oder Träger nach oben so gekrümmt sind, wie dies z.B. in der DE 31 01 844 C2 beschrieben ist. Je niedriger der Querstab angeordnet wäre, um so eher würde der obere vordere Bereich des Fahrgestelles eines einzuschiebenden rückwärtigen Einkaufswagens an den Querstab eines vorausbefindlichen Einkaufswagens anstoßen und um so länger würde sich ein Stapel solcher Einkaufswagen ergeben. Würde man hingegen den Querstab so hoch wie möglich, also dicht an der Unterseite des Korbes vorsehen, könnten z.B. an der Korbunterseite keine Kopplungsschlösser angebracht werden, wie dies zum Beispiel in der DE 32 38 091 A1 zu Fig. 1 offenbart ist. Der genannte Querstab, an welchem die Halteteile angelenkt sind, läßt sich somit nur an Einkaufswagen mit einem ganz bestimmten Fahrgestell anordnen, was eine Einschränkung der Verwendungsmöglichkeiten der Ablage bei den verschieden gestalteten bekannten Einkaufswagen bedeutet.

Die Aufgabe der Erfindung besteht darin, einen Einkaufswagen der gattungsgemäßen Art unter Zuhilfenahme einfachster Mittel so weiterzuentwickeln, daß die vorab geschilderten Mängel ausgeschlossen sind.

Die Aufgabe wird durch die kennzeichnenden Merkmale des Anspruches 1 gelöst.

Dadurch, daß die Halteteile an den Trägern des Fahrgestelles oder an den Seitenwänden des Korbes angelenkt sind, können zur Befestigung der Halteteile Mittel wie Schrauben oder Zapfen, Muttern, Scheiben und/oder Laschen Verwendung finden, die in ihrer Bauweise relativ klein sind und nie den zwischen den Trägern befindlichen Raum wesentlich beanspruchen. Dadurch kann auf den Querstab verzichtet werden und deshalb ist es möglich, eine derart gelagerte und gestaltete Ablage an Einkaufswagen vorzusehen, deren Fahrgestelle nach oben gekrümmte Längsholme aufweisen. Durch das Fehlen des erwähnten Querstabes lassen sich diese Einkaufswagen engstmöglich ineinanderschieben. Auch bleibt der Platz an der Unterseite des Korbes frei und von außen zugänglich, so daß die vorab genannten Kopplungsschlösser Verwendung finden können.

Die Erfindung wird anhand von drei bevorzugten Ausführungsbeispielen näher erläutert. Es zeigt
- Fig. 1: einen Einkaufswagen mit einer in Gebrauchslage befindlichen Ablage;
- Fig. 2: den gleichen Einkaufswagen mit in Nichtgebrauchslage angeordneter Ablage;
- Fig. 3: eine Variante zu Fig. 1 und 2 sowie
- Fig. 4: eine weitere Variante.

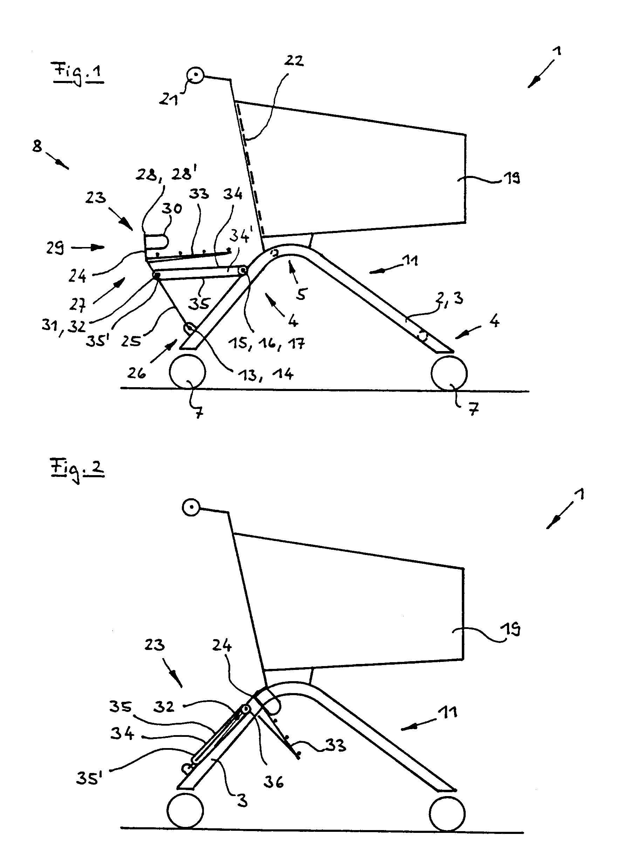

Der in Fig. 1 gezeigte Einkaufswagen 1 besteht in bekannter Weise aus einem sich in Fahrtrichtung verjüngenden Fahrgestell 2, das im wesentlichen aus zwei Trägern 3 besteht, die nach oben gekrümmt sind. Die Schenkel 4 der gewöhnlich aus Rohren oder aus Drähten gebildeten Träger 3 streben in verschiedenen Richtungen schräg nach unten, wobei es gleichgültig ist, ob die Träger 3 an ihren Enden schräg oder senkrecht auf die an den Enden befindlichen Rollen 7 zulaufen. Ebenso ist es gleichgültig, ob die obere Krümmung 5 der Träger 3, wie gezeichnet, bogenförmig gestaltet ist, oder etwa aus zwei Teilkrümmungen, die durch einen geraden Abschnitt miteinander verbunden sind, besteht. Die Träger 3 sind aus Stabilitätsgründen durch zwei Querstreben miteinander verbunden. Das Fahrgestell 2 trägt einen ebenfalls in Fahrtrichtung sich verjüngenden Korb 19, der mit geeigneten Befestigungsmitteln im Bereich der Krümmung 5 mit dem Fahrgestell 2 verbunden ist. Am oberen rückwärtigen Ende des Korbes 19 befindet sich eine Schiebeeinrichtung in Form eines Handgriffes 21. In bekannter Weise schließt das hintere Ende des Korbes 19 mit einer als Rückwand ausgebildeten Klappe 22 ab, die auch einen Kindersitz aufweisen kann und die sich zum Zwecke der Ineinanderschiebbarkeit mehrerer gleicher Einkaufswagen 1 um eine waagrechte Achse nach oben in das Korbinnere verschwenken läßt. Am rückwärtigen Fahrgestellende 8 befindet sich eine durch ein Schwenkteil 24 und durch einen am Schwenkteil 24 angeordneten Ablageabschnitt 33 gebildete Ablage 23. Das Schwenkteil 24 besitzt zwei Schwenkarme 25, die mit ihren unteren Enden 26 um eine gemeinsame waagrechte Achse 14 drehbar an je einer an jedem Träger 3 befindlichen Lasche 13 gelagert sind. Die Schwenkarme 25 sind im oberen Bereich 27 des Schwenkteiles 24 durch eine Querverbindung 28 verbunden, die beispielsweise aus mindestens einem Querstab 28' gebildet ist. An den oberen Enden 29 der Schwenkarme 24 befinden sich seitliche, in Schieberichtung verlaufende Anschläge 30. Das Schwenkteil 24 weist einen Ablageabschnitt 33 auf, der ausgehend von der Querverbindung 28 z.B. durch einen in Fahrtrichtung sich erstreckenden, leicht ansteigenden, freitragenden Gitterrost gebildet ist. Der Ablageabschnitt 33 ist am Schwenkteil 24 bevorzugt starr befestigt. Eine bewegliche Befestigung, bei der sich der Ablageabschnitt 33 um eine waagrechte Achse bewegen läßt, ist ebenfalls möglich. Allerdings ist dann der Ablageabschnitt 33 durch geeignete Mittel (Streben) abzustützen. Damit, wie im Beispiel gezeigt, die Ablage 23 in Gebrauchslage verbleibt, sind zwei Halteteile 34 vorgesehen, die an je einem Träger 3 des Fahrgestelles 2, also an den Längsseiten 11 des Einkaufswagens 1 angeordnet, um eine waagrechte Achse 16 drehbeweglich gelagert sind und die mit je einem Schwenkarm 25, und zwar bevorzugt im oberen Bereich 27 des Schwenkteiles 24 angelenkt, schiebeführungsartig mit diesem verbunden sind. Um diese mit 34' gekennzeichnete Schiebeführung zu erhalten, sind die im Beispiel aus Draht gefertigten Halteteile 34 schlaufenförmig gestaltet. In jedes Schlaufenende 35' greift je ein im Bereich der Längsseiten 31 des Schwenkteiles 24 angeordneter Zapfen 32 ein, so daß sich jeder Zapfen 32 an einem Halteteil 34 bzw. jedes Halteteil 34 mit seinem Schlaufenende 35' an einem Zapfen 32 dann abstützt, wenn sich die Ablage 23 in Gebrauchslage befindet. Die Zapfen 32 sind nicht am Ablageabschnitt 33, sondern bevorzugt im oberen Bereich 27 des Schwenkteiles 24 an oder nahe den Schwenkarmen 25 befestigt. Die Zapfen 32 ragen waagrecht und quer zur Schieberichtung des Einkaufswagens 1 angeordnet, von jedem Schwenkarm 25 weg. Geeignete und für den Fachmann bekannte Sicherungsmittel wie Scheiben und Muttern, die endseitig auf die Zapfen 32 aufsetzbar sind, verhindern, daß sich die Halteteile 34 von den Zapfen 32 lösen können. Die Halteteile 34 sind entgegengesetzt zu ihren Schlaufenenden 35' endseitig so abgebogen, daß die abgebogenen Enden zweier Halteteile 34 beispielsweise gegeneinander gerichtet sind. Die Enden sind in je einer Bohrung 17 gelagert, die je einer Lasche 15 angehört, welche an je einem Träger 3 des Fahrgestelles 2 angeschweißt sind. Die Bohrungen 17 der beiden Laschen 15 liegen auf einer gemeinsamen, quer zur Schieberichtung des Einkaufswagens 1 angeordneten waagrechten Achse 16. Damit sich die Halteteile 34 nicht von den Laschen 15 lösen, sind sie an ihren Enden in bekannter Weise verstiftet oder je mit einer Mutter versehen, die auf jedes, in diesem Fall mit einem Gewinde ausgestattetes Ende aufgeschraubt ist.

Fig. 2 zeigt den in Fig. 1 beschriebenen Einkaufswagen 1 mit einer in Nichtgebrauchslage befindlichen Ablage 23. Das Schwenkteil 24 liegt an den beiden Trägern 3 an. Der Ablageabschnitt 33 befindet sich dabei zwischen den beiden Trägern 3 unterhalb des Korbes 19. Aufgrund der gewählten Kinematik zwischen Schwenkteil 24 und den Halteteilen 34 liegen die Halteteile 34 an je einem Träger 3, in etwa parallel zu diesen verlaufend, an. Jeder Zapfen 32 des Schwenkteiles 24 befindet sich nun ganz nahe am Drehpunkt 36 des ihm zugeordneten Halteteiles 34. Schwenkt man die Ablage 23 aus der Nichtgebrauchslage in die Gebrauchslage, so wandert jeder Zapfen 32 zurück zu jedem Schlaufenende 35′, wobei jedes Halteteil 34 eine um den Drehpunkt 36 verlaufende begrenzte Aufwärtsbewegung beschreibt. Schwenkt man die Ablage 23 erneut in ihre Nichtgebrauchslage, so bewegt sich jeder Zapfen 32 innerhalb der Schlaufen 35 in Richtung zum jeweiligen Drehpunkt 36. Die Halteteile 34 sind im Bereich der Längsseiten 11 des Einkaufswagens 1 angeordnet.

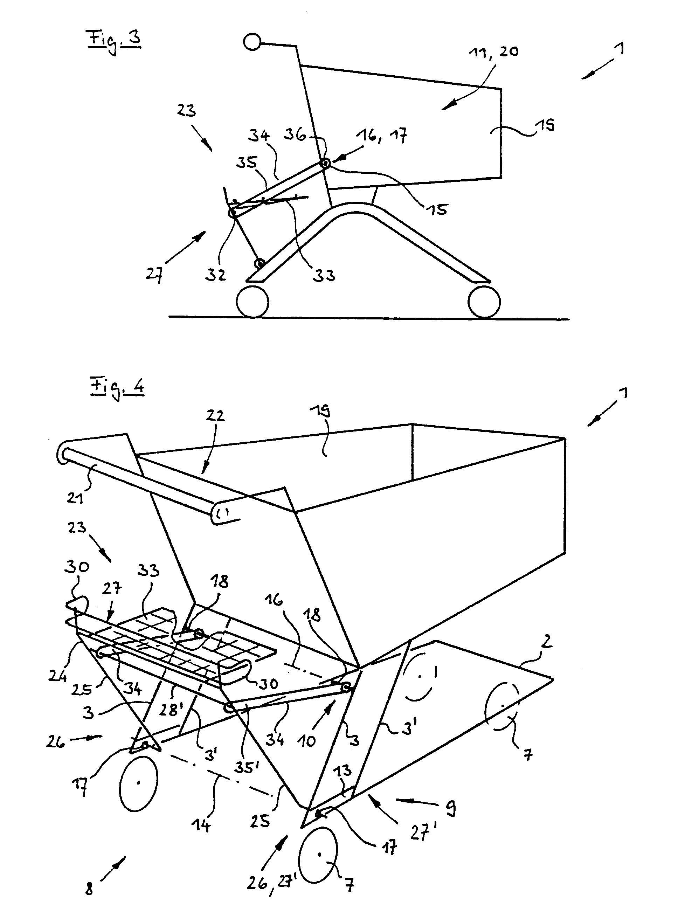

Bei der in Fig. 3 gezeigten Variante sind die Halteteile 34 z.B. außen an den Seitenwänden 20 des Korbes 19, also nicht am Fahrgestell befestigt. Diese Lösung bietet sich dann an, wenn man bei der Ablage 23 auf seitliche Anschläge 30, wie in Fig. 1 und 2 gezeigt, verzichten will. Da die Halteteile 34 an den Längsseiten 11 des Einkaufswagens 1 vorgesehen und mit einem Teil ihres Volumens höher angeordnet sind, als der Ablageabschnitt 33, bilden sie zwangsläufig seitliche Anschläge für auf die Ablage 23 abzustellende Gegenstände. Die gewählte kinematische Verbindung der einzelnen Bauteile untereinander ist im Prinzip die gleiche, wie in den Figuren 1 und 2 gezeigt. Die Befestigung der Halteteile 34 im Bereich ihres Drehpunktes 36 erfolgt in einer für den Fachmann geläufigen Weise mit entsprechenden Befestigungsmitteln wie Schrauben, Muttern, Scheiben und/oder Laschen, wobei z.B. letztere an jeder Seitenwand 20 des Korbes 19 so zu befestigen sind, daß sich die zur Aufnahme der Halteteile 34 vorgesehenen Bohrungen 17 der Laschen 15 ebenfalls auf einer gemeinsamen, quer zur Schieberichtung angeordneten waagrechten Achse 16 befinden. Die mit Schlaufen 35 ausgestatteten Halteteile 34 umgreifen, wie bereits vorab beschrieben, die bevorzugt im oberen Bereich 27 des Schwenkteiles 24 befindlichen Zapfen 32.

Der in Fig. 4 gezeigte Einkaufswagen 1 besteht in üblicher Weise aus einem nach vorne sich verengenden, also konischen Fahrgestell 2 mit vier Rollen 7. Am rückwärtigen Fahrgestellende 8 sind zum Fahrgestell 2 gehörende, zu beiden Seiten des Fahrgestelles 2 schräg nach oben strebende Träger 3, 3' vorgesehen, die einen Korb 19 zur Aufnahme von Einkaufsgut tragen. Der Korb 19 verengt sich in bekannter Weise ebenfalls nach vorne, besitzt also konische Form und weist an seinem hinteren Ende eine Klappe 22 auf, die gemäß bekannter Ausführung um eine oben liegende waagrechte Achse aus einer das hintere Korbende verschließenden Lage in das Korbinnere verschwenkbar ist. Die Klappe 22 kann sowohl als einfache ebene Gitterwand, als auch doppelt mit einer Sitzfläche zur Bildung eines bekannten Kindersitzes gestaltet sein. Nach rückwärts schließt der Korb 19 mit einer Schiebeeinrichtung in Form eines Handgriffes 21 ab. Die Ablage 23 ist im Beispiel bevorzugt nahe den beiden hinteren Trägern 3 angeordnet und besteht im wesentlichen aus einem mit einem Ablageabschnitt 33 ausgestatteten Schwenkteil 24, das zwei auf Abstand gehaltene Schwenkarme 25 besitzt, die mit ihren unteren Enden 26 jeweils nach außen gebogen in je einer im unteren Bereich 9 des Fahrgestelles 2 befestigten, je eine waagrechte Bohrung 17 aufweisenden Lasche 13 gelagert und durch bekannte Klemm- oder Sicherungsmittel gegen axiales Verschieben gesichert sind. Die Bohrungen 17 der Laschen 13 liegen auf einer gemeinsamen waagrechten Achse 14. Die Schwenkarme 25 und damit die Ablage 23 lassen sich somit radial um die waagrechte Achse 14 bewegen. Im oberen Bereich 27 des Schwenkteiles 24 ist ein bevorzugt als Gitterrost oder Bügel gestalteter, winklig zu den Streben angeordneter Ablageabschnitt 33 vorgesehen, welcher freitragend zum vorderen Ende des Einkaufswagens 1 ansteigend gerichtet ist und der in Gebrauchslage eine bevorzugt rechtwinklig zur Klappe 22 angeordnete Lage einnimmt. Der Ablageabschnitt 33 und die Schwenkarme 25 sind aus Festigkeitsgründen bevorzugt durch Stützen verbunden. An seinem oberen Bereich 27 besitzt das Schwenkteil 24 seitliche Anschläge 30, welche verhindern, daß ein auf die Ablage 23 gestellter Gegenstand seitlich herabfällt. Das Innenmaß der seitlichen Anschläge 30 zueinander ist im Beispiel geringfügig größer, als das Außenmaß der hinteren rechten und linken Träger 3 zueinander, so daß zumindest die Träger 3 von den seitlichen Anschlägen 30 von außen dann umgriffen werden, wenn das Schwenkteil 24 in Nichtgebrauchslage an den Trägern 3 anliegt. Bevorzugt im oberen Bereich 10 der Träger 3 sind waagrecht angeordnete Achsstücke 18 vorgesehen, die sich auf einer gemeinsamen waagrechten Achse 16 befinden, wobei an jedem Achsstück 18 ein Halteteil 34, vor Lösen gesichert, drehbeweglich befestigt ist. In Gebrauchslage der Ablage 23 umfassen die Halteteile 34 mit ihren Schlaufenenden 34' beispielsweise einen im oberen Bereich 27 des Schwenkteiles 24 angeordneten, die Schwenkarme 25 verbindenden Querstab 28' an dessen Endbereichen. Die Ablage 23 wird dadurch in ihrer Gebrauchslage gehalten. Sie läßt sich ebenfalls in eine Nichtgebrauchslage schwenken in der das Schwenkteil 24 an den Trägern 3 anliegt. Beim Schwenkvorgang in die Gebrauchs- und Nichtgebrauchslage bewegt sich der Querstab 28' innerhalb der Halteteile 34 hin und her, wie bereits vorab beschrieben.

## Patentansprüche

1. Einkaufswagen (1) mit einem Fahrgestell (2) und mit einem auf dem Fahrgestell (2) aufgesetzten, eine Schiebeeinrichtung aufweisenden Korb (19), dessen Rückwand in das Korbinnere verschwenkbar ist, wobei an dem der Schiebeeinrichtung zugeordneten Ende des Einkaufswagens (1) eine verschwenkbar gelagerte Ablage (23) zum Abstellen größerer Gegenstände vorgesehen ist und die Ablage (23) aus einer Nichtgebrauchslage in eine Gebrauchslage und umgekehrt bewegbar ist und wobei die mit einem Schwenkteil (24), einem Ablageabschnitt (33) und mit zwei Schwenkarmen (25) ausgestattete Ablage (23) in ihrer Gebrauchslage durch zwei am Fahrgestell (2) um eine waagrechte Achse (16) drehbar gelagerte Halteteile (34) gehalten ist, die einen Teil der Ablage (23) schiebeführungsartig umfassen, dadurch gekennzeichnet, daß die Halteteile (34) an den Trägern (3) des Fahrgestelles (2) oder an den Seitenwänden (20) des Korbes (19) gelagert sind und daß der von den Halteteilen (34) umfaßte Teil der Ablage (23) durch im oberen Bereich (27) des Schwenkteiles (24) befindliche, außerhalb des Ablageabschnittes (33) gelegene und an oder nahe den Schwenkarmen (25) angeordnete Abstützstellen gebildet ist.

2. Einkaufswagen nach Anspruch 1, dadurch gekennzeichnet, daß die Abstützstellen durch je einen an den Schwenkarmen (25) befestigten, quer zur Schieberichtung des Einkaufswagens (1) angeordneten Zapfen (32) gebildet sind.

3. Einkaufswagen nach Anspruch 1, dadurch gekennzeichnet, daß die Abstützstellen durch die Endbereiche eines die Schwenkarme (25) verbindenden Querstabes (28) gebildet sind.

4. Einkaufswagen nach wenigstens einem der Ansprüche 1 bis 3, dadurch gekennzeichnet, daß die Halteteile (34) seitliche Anschläge für auf die Ablage (23) abzustellende Gegenstände bilden.

## Claims

1. A shopping trolley (1) comprising a base frame (2) and a basket (19) which is mounted on the base frame (2) and has a pushing arrangement, the rear wall of the basket (19) being tiltable into the interior of the basket, wherein a tiltably mounted receiver (23) for depositing relatively large objects is provided at the end of the shopping trolley (1) associated with the pushing arrangement, and the receiver (23) is movable from a position of non-use into a position of use and vice versa, and wherein the receiver (23), which is provided with a pivoting part (24), a receiving portion (33) and two pivoting arms (25), is held in its position of use by two holding members (34) mounted on the base frame (2) so as to rotate about a horizontal axis (16), the said holding members (34) enclosing part of the receiver (23) in a slidingly guiding manner, characterised in that the holding members (34) are mounted on the supports (3) of the base frame (2) or on the side walls (20) of the basket (19) and in that the part of the receiver (23) enclosed by the holding members (34) is formed by support points located in the upper region (27) of the pivoting part (24), situated outside the receiving portion (33) and arranged on or near the pivoting arms (25).

2. A shopping trolley according to claim 1, characterised in that the support points are formed by pins (32) arranged transversely to the pushing direction of the shopping trolley (1) and fixed to each of the pivoting arms (25).

3. A shopping trolley according to claim 1, characterised in that the support points are formed by the end regions of a crossbar (28) connecting the pivoting arms (25).

4. A shopping trolley according to at least one of claims 1 to 3, characterised in that the holding members (34) form lateral stops for objects to be deposited on the receiver (23).

## Revendications

1. Chariot à provisions (1) comprenant un châssis de roulement (2) et un panier (19) qui est posé sur le châssis de roulement (2), qui comporte un dispositif à pousser et dont la paroi arrière peut pivoter dans l'intérieur du panier, cependant qu'il est prévu, sur l'extrémité du chariot à provisions (1) associée au dispositif à pousser, un support (23) qui est monté pivotant et qui est destiné à y poser des objets volumineux, que le support (23) peut être déplacé d'une position de non-utilisation à une position d'utilisation, et inversement, et que le support (23), lequel est équipé d'une partie pivotante (24), d'une partie d'appui (33) et de deux bras pivotants (25), est maintenu dans sa position d'utilisation par deux pièces de maintien (34) qui sont montées sur le châssis de roulement (2) en pouvant tourner autour d'un axe horizontal (16) et qui entourent une partie du support (23) à la manière d'un guidage coulissant, caractérisé par le fait que les pièces de maintien (34) sont montées sur les montants (3) du châssis de roulement (2) ou sur les parois latérales (20) du panier (19), et par le fait que la partie du support (23) qui est entourée par les pièces de maintien (34) est constituée par des endroits d'appui qui se trouvent dans la région supérieure (27) de la partie pivotante (24), qui sont placés à l'extérieur de la partie d'appui (33) et qui sont disposés sur les bras pivotants (25), ou au voisinage de ceux-ci.

2. Chariot à provisions selon la revendication 1, caractérisé par le fait que les endroits d'appui sont constitués à chaque fois par un tenon (32) qui est fixé aux bras pivotants (25) et qui est disposé transversalement par rapport à la direction de poussée du chariot à provisions (1).

3. Chariot à provisions selon la revendication 1, caractérisé par le fait que les endroits d'appui sont constitués par les zones d'extrémité d'une tige transversale (28) qui relie les bras pivotants (25).

4. Chariot à provisions selon l'une au moins des revendications 1 à 3, caractérisé par le fait que les pièces de maintien (34) constituent des butées latérales pour des objets à placer sur le support (23).
